# FASCICULE DE BREVET EUROPEEN

(11) **EP 2 349 816 B1**
(45) Date de publication et mention de la délivrance du brevet: **22.01.2014**
(21) Numéro de dépôt: 09795462.2
(22) Date de dépôt: 18.11.2009
(51) Int. Cl.: B62D 5/04, B62D 5/065, B62D 6/00

(54) **DISPOSITIF DE COMMANDE POUR UNE DIRECTION ASSISTEE DE VEHICULE ET DIRECTION ASSISTEE DE VEHICULE INTEGRANT UN TEL DISPOSITIF DE COMMANDE**
STEUERGERÄT FÜR SERVOLENKUNG EINES FAHRZEUGS UND SERVOLENKUNG EINES FAHRZEUGS MIT SOLCHEM STEUERGERÄT
CONTROL DEVICE FOR VEHICLE POWER-ASSISTED STEERING AND VEHICLE POWER-ASSISTED STEERING INCORPORATING SUCH A CONTROL DEVICE

(30) Priorité: 25.11.2008 FR 0857986
(43) Date de publication de la demande: 03.08.2011
(73) Titulaire: Renault S.A.S., 92100 Boulogne-Billancourt (FR)
(72) Inventeur: CHAUVELIER, Eric, F-78320 Le Mesnil Saint Denis (FR)
(86) Numéro de dépôt international: PCT/FR2009/052214
(87) Numéro de publication internationale: WO 2010/061098

(56) Documents cités:
- US-A- 5 761 627
- US-B1- 6 216 814

## Description

La présente invention concerne un dispositif de commande pour une direction assistée de véhicule. Elle concerne aussi une direction assistée de véhicule intégrant un tel dispositif de commande.

Dans l'état de la technique, on connaît déjà des directions électriques assistées. Un tel système de direction comporte un volant qui est mécaniquement connecté sur les roues directrices avec un dispositif d'assistance qui ajoute de la puissance mécanique d'assistance à l'effort appliqué par le conducteur sur le volant de direction.

Dans un premier état de la technique, l'effort du conducteur et l'état dynamique du véhicule sont détectés à l'aide de capteurs spécifiques. Par exemple, les actions du conducteur peuvent être détectés par des capteurs d'angle volant ou encore par des capteurs de couple exercé sur la colonne de direction. De même, l'état dynamique du véhicule peut être détecté par un capteur de vitesse de véhicule, des accéléromètres pour mesurer l'accélération longitudinale et/ou radiale. De l'ensemble de ces mesures, un calculateur convenablement programmé produit des commandes adaptées appliquées à un générateur de puissance mécanique d'assistance.

Particulièrement, un tel générateur de puissance mécanique d'assistance comporte un moteur électrique dont le rotor est connecté par l'intermédiaire d'un coupleur mécanique (cas des directions assistées électriques) ou par l'intermédiaire d'un circuit fluidique (cas des directions assistées fluidiques).

Ce premier état de la technique présente un inconvénient dans la complexité introduite par l'ensemble des capteurs mis en oeuvre.

Il existe ainsi un second état de la technique dans lequel, par exemple dans le document FR-B1-2.864.000, on se passe de capteur de mesure directe de l'action du conducteur sur le volant. A cette fin, il est connu d'analyser la forme d'onde du courant électrique dans le circuit d'alimentation électrique du moteur électrique qui est la source primaire de puissance mécanique d'assistance. En effet, dans le cas où le couplage entre l'arbre de sortie du moteur électrique et le volant de direction est bidirectionnel, les efforts du conducteur produisent une modification du couple résistant subi par le moteur électrique d'assistance. Il en résulte, surtout pour les circuits électriques alimentés par une source électrique à tension sensiblement constante comme une batterie de véhicule, ce qui est le cas le plus répandu dans le cas des véhicules, une modification de l'intensité du courant circulant dans le circuit électrique.

Dans le document FR-B1-2.864.000, il est décrit un moyen pour reconstruire par calcul l'information de l'angle volant appliqué par le conducteur sur le volant de direction sur la base d'une mesure électrique du courant électrique d'alimentation du moteur électrique d'entraînement de la pompe d'un circuit hydraulique d'assistance de direction.

Cependant, cet état de la technique enseigne le recours à une phase d'apprentissage au cours de laquelle un certain nombre de points de fonctionnement sont acquis qui permettent de faire correspondre un effort sur le volant à un courant électrique dans le circuit électrique d'alimentation du moteur électrique d'assistance. Puis, une extrapolation permet d'établir, par exemple sous forme de tables, une liste étendue de points de consigne. Il en résulte que dans une étape d'exploitation, cet état de la technique permet d'associer un courant électrique d'assistance pour une mesure d'un point de fonctionnement. Mais, une telle table ne permet pas de répondre à des situations dynamiques, ni de suivre le vieillissement du système contrôlé.

Le document US 5 761 627 A montre un dispositif de commande selon le préambule de la revendication 1.

Pour porter remède à ces inconvénients de l'état de la technique, la présente invention concerne un dispositif de commande d'une direction assistée électrique du genre dans lequel la puissance d'assistance est fournie par un moteur électrique, mécaniquement couplé à un mécanisme de direction, et dans lequel les efforts du conducteur sur un volant se traduisent par une modification d'un paramètre de fonctionnement du moteur électrique et au moyen d'un circuit d'alimentation du moteur électrique. Selon l'invention, le dispositif de commande comporte :
un moyen de mesure d'un paramètre électrique du circuit d'alimentation du moteur électrique d'assistance pour déterminer une sollicitation d'assistance de braquage;
un circuit pour déterminer une classe d'assistance de braquage en réponse à la sollicitation d'assistance mesurée par le circuit, la classe d'assistance de braquage déterminant des paramètres de consigne du moteur électrique ; et
un circuit de pilotage pour générer une prestation d'assistance des paramètres de consigne définis par ladite classe d'assistance de direction pour piloter une source de courant de puissance pour déterminer le fonctionnement du moteur électrique.

Selon d'autres aspects de l'invention, le dispositif de commande comporte ou est tel que :
le moyen de mesure d'un paramètre électrique du circuit d'alimentation du moteur électrique d'assistance pour déterminer une sollicitation d'assistance de braquage comporte un circuit de mesure du courant circulant dans le circuit d'alimentation du moteur électrique ;
le circuit pour déterminer une classe d'assistance de braquage comporte au moins une classe d'assistance de braquage enregistrée sous la forme de la donnée d'au moins deux valeurs de consigne de régime du moteur électrique, la première valeur (N1) correspondant à aucune prestation d'assistance, la dite au moins seconde valeur (N2) correspondant à une prestation d'assistance ;
la classe d'assistance de braquage détermine aussi au moins un premier seuil I1 au-dessus duquel au moins une dite prestation d'assistance est déterminée et un second seuil I2 au-dessous duquel aucune prestation d'assistance est appliquée ;
le circuit pour déterminer une classe d'assistance de braquage coopère avec un moyen pour introduire un retard sur un paramètre de consigne comme le régime de consigne pour au moins un changement d'état du système de direction comme le retour à un état sans prestation d'assistance ;
le circuit pour déterminer une classe d'assistance de braquage coopère avec un moyen pour réaliser un filtrage sur un paramètre de consigne comme le régime de consigne pour au moins un changement d'état du système de direction comme le retour à un état sans prestation d'assistance.

L'invention concerne enfin une direction assistée de véhicule du genre comportant un circuit hydraulique agissant sur un mécanisme de direction au moyen d'une pompe entraînée par un moteur électrique. Le dit moteur électrique est alimenté sous la commande d'un dispositif de commande selon l'invention.

D'autres caractéristiques et avantages de la présente invention seront mieux compris à l'aide de la description et des figures annexées parmi lesquelles :
- la figure 1 est un schéma bloc d'un mode particulier de réalisation de l'invention ;
- la figure 2 est un graphe expliquant la structuration d'une classe d'assistance dans un mode de réalisation de l'invention ;
- la figure 3 est un schéma bloc d'un autre mode de réalisation de l'invention ; et
- la figure 4 représente les graphes en courant et en régime d'un dispositif de commande dans un exemple de mise en oeuvre de l'invention.

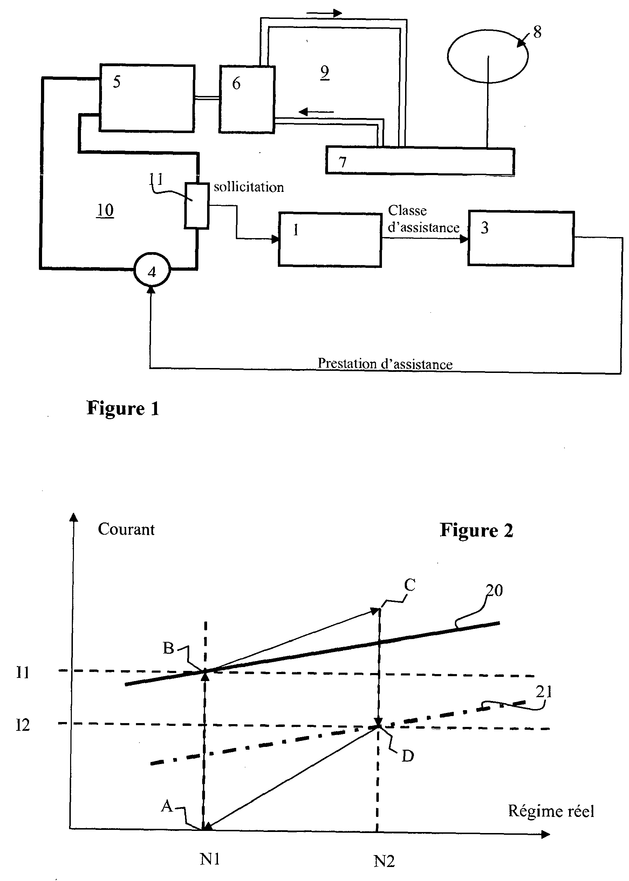

A la figure 1, on a représenté un schéma bloc d'un mode de réalisation d'une direction assistée de véhicule incorporant un dispositif de commande selon l'invention. Dans ce mode de réalisation, la direction assistée est du type hydraulique dans lequel un mécanisme de direction assistée 7 est constitué par un vérin hydraulique qui est connecté à un circuit hydraulique 9 sous pression d'une pompe hydraulique 6 entraînée par l'arbre rotorique d'un moteur électrique 5 d'assistance de direction. Un volant de braquage 8 est couplé par l'intermédiaire de sa colonne de direction à une entrée mécanique du mécanisme de direction 7.

Cette disposition bien connue permet que les efforts ou sollicitations du conducteur sur le volant 8 se répercutent comme un couple d'entraînement ou résistant sur le moteur électrique 5.

Le moteur électrique 5 est connecté par un circuit d'alimentation électrique 10 à une source électrique 4 dont la puissance qu'elle débite peut être commandée par un signal de commande. Notamment, dans le cas de sources électriques à tension constante, on sait faire varier la puissance électrique débitée par exemple en faisant varier un paramètre comme le rapport cyclique d'un découpage de la tension d'alimentation à modulation de largeur d'impulsions (PWM).

Dans le circuit d'alimentation électrique 10, on dispose un circuit 11 pour déterminer une sollicitation d'assistance de braquage sur un paramètre électrique du circuit d'alimentation 10. Dans un mode de réalisation, le circuit comporte un capteur de courant 11 qui permet de produire un signal de mesure de l'intensité du courant circulant dans le circuit d'alimentation électrique 10.

Selon l'invention, au lieu de restituer une information d'angle de braquage comme c'est le cas dans l'état de la technique, il est directement déterminé une classe d'assistance de direction en fonction d'une sollicitation d'assistance de braquage, détectée ici par la seule mesure du courant circulant dans le circuit d'alimentation 10. A la suite, le dispositif de pilotage détermine une prestation d'assistance de direction sur la base de la sollicitation d'assistance de braquage en fonction de classes d'assistance de braquage prédéterminées.

Dans un mode particulier de réalisation, une pluralité de classes d'assistance de direction est enregistrée sous forme de données permettant de définir des profils de consigne de couple ou de régimes (vitesses de rotation) à appliquer par le moteur électrique 5 de la pompe 6, grâce au circuit de commande 3 du moteur 5.pour commander le comportement de la direction assistée du véhicule.

Une sollicitation d'assistance de braquage est entièrement déterminée par une valeur ou une séquence de valeurs de mesure du courant circulant dans le circuit d'alimentation 10. Notamment, on peut évaluer une sollicitation à l'aide d'une intensité, d'une variation d'intensité sur une durée déterminé, une intensité pendant une durée déterminée, ce qui correspond à une consommation électrique.

Une classe d'assistance de braquage est alors définie par une valeur ou une séquence de valeurs de consigne d'au moins un paramètre de commande du système de direction assistée, par exemple comme le régime ou vitesse de rotation du moteur électrique d'entraînement de la pompe du circuit hydraulique de la direction assistée commandée.

Une prestation d'assistance de braquage est générée dès lors qu'une classe d'assistance de braquage a été déterminée par sa sélection en fonction de la sollicitation d'assistance essentiellement produite par l'application d'un effort de la part du conducteur sur le volant de direction ou de braquage.

Pour mettre en pratique une technique basée sur les classes d'assistance selon l'invention, dans un mode particulier de réalisation, le dispositif de commande comporte :
- un circuit 1 pour déterminer une sollicitation d'assistance de braquage sur la base de ladite mesure 11 de l'intensité dans le circuit d'alimentation du moteur électrique ; et
- un circuit de pilotage 3 du moteur électrique d'assistance 5 pour générer une prestation d'assistance définie par la classe d'assistance de direction déterminée par ledit circuit 1 pour déterminer une sollicitation d'assistance.

A la Figure 2, on a représenté un graphe expliquant la structuration d'une classe d'assistance dans un mode de réalisation. L'état du système constitué par la direction assistée et son dispositif de commande est décrit dans un espace de données composé du Régime réel du moteur électrique d'assistance, porté en abscisse du graphe de la Figure 2, et de son courant d'alimentation, porté en ordonnée du graphe de la Figure 2. On a décrit un cycle d'assistance entre quatre points A, B, C et D de sorte que, lorsque le conducteur applique au point B une force de braquage dépassant un niveau tel que le courant mesuré dans le circuit moteur dépasse un seuil I1(N) prédéterminé, une prestation d'assistance de braquage est générée de sorte que l'état (N, I) du système de direction assistée parvient au point C, qui est caractérisé par la fin de la partie croissante de l'application de l'effort de braquage par le conducteur.

La prestation d'assistance de B à C est la combinaison d'un pilotage prédéterminé du moteur électrique et de l'effort du conducteur. La propre prestation d'assistance du système est représentée par une fonction préenregistrée : I1 = f1 (N) croissante. La fonction prédéterminée f1() est du genre : f1(N)= a*N + I10, dans laquelle a et I10 sont des constantes prédéterminées dans la classe d'assistance.

Lorsque le conducteur cesse d'appliquer un effort de braquage croissant à partir du point C, la prestation d'assistance est prédéterminée sur un régime constant N2 correspondant au régime atteint à la fin de la sollicitation sur le volant et le courant descend jusqu'à une valeur 12 < I1 au point D du cycle d'assistance de la Figure 1. Le conducteur réduit jusqu'à annuler alors son effort de braquage, ce qui a pour effet que le moteur électrique est alimenté selon une loi de courant décroissante jusqu'à s'annuler au point A du cycle d'assistance, où la vitesse d'entraînement de la pompe est à une valeur N1 < N2.

Dans un mode de réalisation, la loi de courant est déterminée par une fonction croissante I2 = f2(N) fonction du régime moteur comme une fonction linéaire de la forme I2 = a*N + I20, dans laquelle a et I20 sont des constantes prédéterminées avec la classe d'assistance de direction.

Dans un mode de réalisation, la classe d'assistance de direction ou de braquage est déterminée par :
- deux régimes de consigne N1 et N2, le premier N1 étant caractéristique d'un état du système de direction assistée dans lequel la direction ne reçoit aucune prestation d'assistance, le second N2 étant caractéristique d'un état du système de direction assistée dans lequel la direction reçoit une prestation d'assistance constante ;
- deux seuils de détection du courant dans le circuit 10 d'alimentation du moteur électrique 5, le premier I1 = f1(N), représenté par la courbe 20, au-dessus duquel une prestation d'assistance constante de consigne de régime N2 sera appliquée, le second I2 = f2(N), représenté par la courbe 21, au-dessous duquel aucune prestation d'assistance sous une consigne de régime N1 sera appliquée

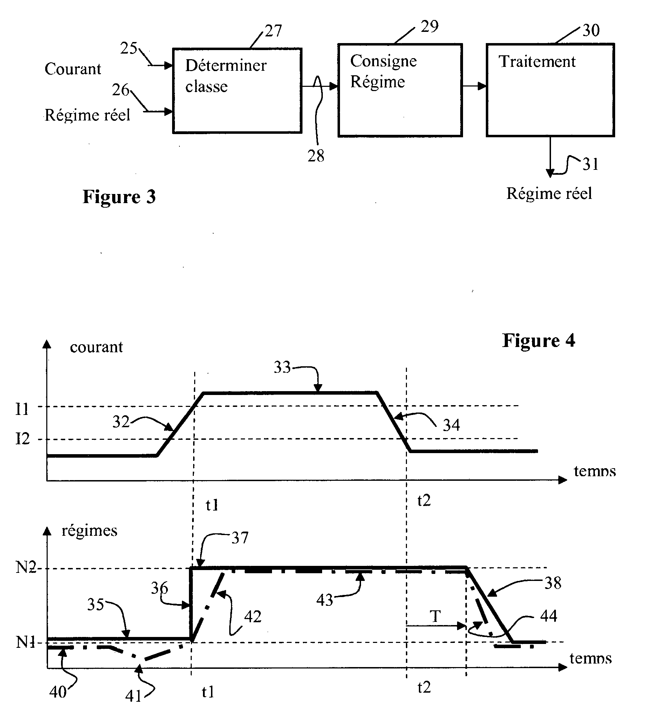

A la figure 3, on a représenté un schéma bloc d'un automate capable de déterminer le régime réel de consigne sur sa sortie 31 en fonction de la mesure du courant d'entrée 25 et de la donnée du régime réel 26 à l'instant précédent celui d'établissement de la consigne.

Un premier bloc 27 qui reçoit les paramètres d'entrée précités 25 et 26 détermine la classe d'assistance. Dans l'exemple de la Figure 2, la classe d'assistance est entièrement déterminée par la donnée des valeurs de courant I1 et I2 et les régimes réels de consigne N1 et N2. De plus, les lois de variation f1(N) et f2(N) du cycle ABCD sont enregistrées. Le premier bloc 27 de détermination de la classe d'assistance présente à sa sortie un paramètre d'activation ou de commande de la direction assistée sur sa sortie 28.

Le signal de consigne que porte le paramètre d'activation ou de commande de la direction assistée sur la sortie 28 du premier bloc 27 est connecté en entrée d'un second bloc de détermination d'une consigne de régime 29. Quand la classe d'assistance a été déterminée, le second bloc permet de déterminer la loi de consigne de régime. Dans l'exemple de la figure 2, deux consignes N1 et N2 sont disponibles et sont déterminées seulement lorsque le courant mesuré dépasse un seuil déterminé I1 ou se trouve en dessous d'un autre seuil déterminé I2.

Quand une telle situation est détectée, la consigne de régime du moteur électrique de la pompe est réglée respectivement à la valeur N2 ou à la valeur N1. Le signal de consigne de régime est produit en sortie du second bloc 29.

Le signal de sortie du second bloc 20 est connecté en entrée d'un troisième bloc de traitement des consignes 30. A la figure 4, on a représenté deux diagrammes qui sont respectivement :
- un diagramme représentant l'évolution au cours du temps du courant détecté et
- un diagramme représentant l'évolution synchronisée au cours du temps de la consigne de régime traitée en sortie du bloc 30 ainsi que du régime réel mesuré lors d'essais.

Lorsque le conducteur applique une sollicitation sur le volant de direction peu avant la date t1, le courant mesuré augmente selon une rampe 32 jusqu'à dépasser une valeur I1 prédéterminée. Le circuit de commande qui détecte alors le dépassement du seuil I1 déterminé dans la classe d'assistance prédéterminée par le premier bloc 27 du circuit de la Figure 3, génère alors une consigne de régime N2 le régime du moteur électrique de la pompe passant d'un régime de repos 35 à un régime d'assistance active 37 par un saut brusque 37. Pendant tout le temps que le conducteur applique une sollicitation, le courant mesuré est supérieur à un seuil de courant déterminé I2 qui est enregistré dans la classe d'assistance maintenue par le premier bloc du circuit de la figure 2.

Lorsque le conducteur cesse sa sollicitation sur le volant, le courant mesuré dans le circuit d'alimentation du moteur de la pompe d'assistance redescend selon une rampe 34. Lorsque le second bloc détecte que le courant est inférieur au second seuil prédéterminé de courant mesuré, enregistré dans la classe d'assistance, il génère une requête de fin d'assistance qui est reçue par le troisième bloc de traitement de la consigne de régime.

Le troisième bloc 30 de traitement de la consigne de régime exécute alors un retard T prédéterminé pour placer un régime N1 de maintien de la pompe d'assistance. Il exécute ensuite, à la fin de l'écoulement de la durée T prédéterminée, un filtrage passe-bas de la consigne de sorte que la pente de la rampe 38 soit déterminée. Le régime appliqué est alors un régime de maintien de l'assistance N1.

Sur le second diagramme du régime on a représenté la mesure non utilisée du régime moteur, indiquée ici à titre de représentation de l'exécution de l'invention, réellement visible dans une application. Le régime moteur se réduit sous le régime de maintien de l'assistance hydraulique 40 par un décrochement inférieur 41 puis la variation de consigne 36 est transformée par les inerties, pertes de charge et compressibilité du système hydraulique, par une rampe 42 qui se poursuit par l'exécution de la consigne 37 selon un plat 43. Enfin lors de la rampe décroissante 38, une rampe plus rapide 44 provoquée par le retour volant est visible.

## Revendications

1. Dispositif de commande d'une direction assistée électrique du genre dans lequel la puissance d'assistance est fournie par un moteur électrique (5), mécaniquement couplé à un mécanisme de direction (7), et dans lequel les efforts du conducteur sur un volant (8) se traduisent par une modification d'un paramètre de fonctionnement du moteur électrique (5) et au moyen d'un circuit d'alimentation (10) du moteur électrique (5),
**caractérisé en ce qu'**il comporte :
un moyen de mesure (11) d'un paramètre électrique du circuit d'alimentation (10) du moteur électrique d'assistance (5) pour déterminer une sollicitation d'assistance de braquage;
un circuit (1) pour déterminer une classe d'assistance de braquage en réponse à la sollicitation d'assistance mesurée par le circuit (11), la classe d'assistance de braquage déterminant des paramètres de consigne du moteur électrique pour remplir au moins une prestation d'assistance du système représentée par une fonction préenregistrée : I1 = f1(N) ; où f1(N) = a*N + I10, dans laquelle a et I10 sont des constantes prédéterminées dans la classe d'assistance, et
un circuit de pilotage (3) pour générer une prestation d'assistance des paramètres de consigne (N1, N2) définis par ladite classe d'assistance de direction pour piloter une source de courant de puissance (4) pour déterminer le fonctionnement du moteur électrique (5).

2. Dispositif selon la revendication 1, **caractérisé en ce que** le moyen de mesure (11) d'un paramètre électrique du circuit d'alimentation (10) du moteur électrique d'assistance (5) pour déterminer une sollicitation d'assistance de braquage comporte un circuit de mesure du courant circulant dans le circuit d'alimentation (10) du moteur électrique (5).

3. Dispositif selon la revendication 2, **caractérisé en ce que** le circuit (1) pour déterminer une classe d'assistance de braquage comporte au moins une classe d'assistance de braquage enregistrée sous la forme de la donnée d'au moins deux valeurs de consigne de régime du moteur électrique, la première valeur (N1) correspondant à aucune prestation d'assistance, la dite au moins seconde valeur (N2) correspondant à une prestation d'assistance.

4. Dispositif selon la revendication 3, **caractérisé en ce que** la classe d'assistance de braquage détermine aussi au moins un premier seuil I1 au-dessus duquel au moins une dite prestation d'assistance est déterminée et un second seuil 12 au-dessous duquel aucune prestation d'assistance est appliquée.

5. Dispositif selon l'une quelconque des revendications précédentes, **caractérisé en ce que** le circuit (1) pour déterminer une classe d'assistance de braquage coopère avec un moyen pour introduire un retard sur un paramètre de consigne comme le régime de consigne pour au moins un changement d'état du système de direction comme le retour à un état sans prestation d'assistance.

6. Dispositif selon l'une quelconque des revendications précédentes, **caractérisé en ce que** le circuit (1) pour déterminer une classe d'assistance de braquage coopère avec un moyen pour réaliser un filtrage sur un paramètre de consigne comme le régime de consigne pour au moins un changement d'état du système de direction comme le retour à un état sans prestation d'assistance.

7. Direction assistée de véhicule du genre comportant un circuit hydraulique (9) agissant sur un mécanisme de direction (7) au moyen d'une pompe (6) entraînée par un moteur électrique (5), **caractérisé en ce que** le dit moteur électrique est alimenté sous la commande d'une dispositif de commande selon l'une quelconque des revendications précédentes.

## Patentansprüche

1. Steuervorrichtung einer elektrischen Servolenkung von der Art, bei der die Servoleistung von einem mechanisch mit einem Lenkmechanismus (7) gekoppelten Elektromotor (5) geliefert wird, bei der die Kraftanwendungen des Fahrers auf ein Lenkrad (8) sich durch eine Veränderung eines Betriebsparameters des Elektromotors (5) und mittels einer Versorgungsschaltung (10) des Elektromotors (5) äußern,
**dadurch gekennzeichnet, dass** sie aufweist:
eine Einrichtung (11) zur Messung eines elektrischen Parameters der Versorgungsschaltung (10) des elektrischen Servomotors (5), um eine Servoeinschlagbeanspruchung zu bestimmen; eine Schaltung (1), um eine Servoeinschlagklasse als Reaktion auf die von der Schaltung (11) gemessene Servobeanspruchung zu bestimmen, wobei die Servoeinschlagklasse Sollparameter des Elektromotors bestimmt, um mindestens eine Servoleistung des Systems zu erfüllen, die durch eine voreingespeicherte Funktion dargestellt wird: I1 = f1(N); wobei gilt f1(N) = a*N + I10, wobei a und I10 vorbestimmte Konstanten in der Servoklasse sind, und
eine Steuerschaltung (3), um eine Servoleistung der von der Servolenkklasse definierten Sollparameter (N1, N2) zu erzeugen, um eine Leistungsstromquelle (4) zu steuern, um den Betrieb des Elektromotors (5) zu bestimmen.

2. Vorrichtung nach Anspruch 1, **dadurch gekennzeichnet, dass** die Messeinrichtung (11) eines elektrischen Parameters der Versorgungsschaltung (10) des elektrischen Servomotors (5) zur Bestimmung einer Servoeinschlagbeanspruchung eine Messschaltung des in der Versorgungsschaltung (10) des Elektromotors (5) fließenden Stroms aufweist.

3. Vorrichtung nach Anspruch 2, **dadurch gekennzeichnet, dass** die Schaltung (1) zur Bestimmung einer Servoeinschlagklasse mindestens eine in Form des Datenwerts von mindestens zwei Drehzahlsollwerten des Elektromotors gespeicherte Servoeinschlagklasse aufweist, wobei der erste Wert (N1) keiner Servoleistung entspricht, wobei der mindestens zweite Wert (N2) einer Servoleistung entspricht.

4. Vorrichtung nach Anspruch 3, **dadurch gekennzeichnet, dass** die Servoeinschlagklasse auch mindestens eine erste Schwelle I1, oberhalb der mindestens eine Servoleistung bestimmt wird, und eine zweite Schwelle 12 bestimmt, unterhalb der keine Servoleistung angewendet wird.

5. Vorrichtung nach einem der vorhergehenden Ansprüche, **dadurch gekennzeichnet, dass** die Schaltung (1) zur Bestimmung einer Servoeinschlagklasse mit einer Einrichtung zusammenwirkt, um eine Verzögerung bei einem Sollparameter wie der Solldrehzahl für mindestens eine Zustandsänderung des Lenksystems wie die Rückkehr zu einem Zustand ohne Servoleistung einzuführen.

6. Vorrichtung nach einem der vorhergehenden Ansprüche, **dadurch gekennzeichnet, dass** die Schaltung (1) zur Bestimmung einer Servoeinschlagklasse mit einer Einrichtung zusammenwirkt, um eine Filterung an einem Sollparameter wie der Solldrehzahl für mindestens eine Zustandsänderung des Lenksystems wie die Rückkehr zu einem Zustand ohne Servoleistung durchzuführen.

7. Fahrzeug-Servolenkung von der Art, die eine Hydraulikschaltung (9) aufweist, die auf einen Lenkmechanismus (7) mittels einer von einem Elektromotor (5) angetriebenen Pumpe (6) einwirkt, **dadurch gekennzeichnet, dass** der Elektromotor unter der Steuerung einer Steuervorrichtung nach einem der vorhergehenden Ansprüche versorgt wird.

## Claims

1. Control device for electric power-assisted steering of the kind in which the assistance power is supplied by an electric motor (5), mechanically coupled to a steering mechanism (7), and in which the forces applied by the driver to a steering wheel (8) result in a modification of an operating parameter of the electric motor (5) and by means of a circuit (10) for supplying power to the electric motor (5),
**characterized in that it comprises:**
a means (11) for measuring an electric parameter of the circuit (10) for supplying power to the electric power-assistance motor (5) in order to determine a steering-angle assistance demand;
a circuit (1) for determining a steering-angle assistance class in response to the assistance demand measured by the circuit (11), the steering-angle assistance class determining setpoint parameters for the electric motor to fulfil at least one assistance contribution for the system represented by a prestored function: I1 = f1(N); where f1(N) = a*N + I10, in which a and I10 are predetermined constants in the assistance class, and
a control circuit (3) for generating an assistance contribution from the setpoint parameters (N1, N2) defined by said steering assistance class in order to control a power current source (4) to determine the operation of the electric motor (5).

2. Device according to Claim 1, **characterized in that** the means (11) for measuring an electric parameter of the circuit (10) for supplying power to the electric power-assistance motor (5) in order to determine a steering-angle assistance demand comprises a circuit for measuring the current circulating in the circuit (10) for supplying power to the electric motor (5).

3. Device according to Claim 2, **characterized in that** the circuit (1) for determining a steering-angle assistance class comprises at least one steering-angle assistance class stored in the form of the data from at least two speed setpoint values of the electric motor, the first value (N1) corresponding to no assistance contribution, said at least second value (N2) corresponding to an assistance contribution.

4. Device according to Claim 3, **characterized in that** the steering-angle assistance class also determines at least one first threshold I1 above which at least one said assistance contribution is determined and a second threshold I2 below which no assistance contribution is applied.

5. Device according to any one of the preceding claims, **characterized in that** the circuit (1) for determining a steering-angle assistance class cooperates with a means for introducing a delay on a setpoint parameter such as the setpoint speed for at least one change of state of the steering system such as the return to a state without assistance contribution.

6. Device according to any one of the preceding claims, **characterized in that** the circuit (1) for determining a steering-angle assistance class cooperates with a means for providing a filtering on a setpoint parameter such as the setpoint speed for at least one change of state of the steering system such as the return to a state without assistance contribution.

7. Vehicle power-assisted steering of the kind comprising a hydraulic circuit (9) acting on a steering mechanism (7) by means of a pump (6) driven by an electric motor (5), **characterized in that** said electric motor is powered under the control of a control device according to any one of the preceding claims.
